# EUROPEAN PATENT APPLICATION

(11) **EP 4 033 317 A1**
(43) Date of publication of application: **27.07.2022**
(21) Application number: 22153377.1
(22) Date of filing: 26.01.2022
(51) Int. Cl.: G05B 19/418, G05B 23/02, G06Q 50/04

(54) **METHOD AND SYSTEM FOR MANAGING A CYBER-PHYSICAL PRODUCTION SYSTEM WITH PREDICTIVE CAPABILITIES OF ANOMALOUS OPERATING CONDITIONS**

(30) Priority: 26.01.2021 IT 202100001394
(71) Applicant: Sedapta S.r.l., 16128 Genova (IT)
(72) Inventor: GROSSO, ALBERTO, GENOVA (IT); CASU, MATTEO, GENOVA (IT)
(74) Representative: Karaghiosoff, Giorgio Alessandro

(57) **Abstract**

A method and system for the maintenance of physical and virtual components of a cyber physical production system (CPPS), which, by having a decentralised and transversal intelligence, allows to assess situations related to the components of the system and to take decisions autonomously by connecting these components, when necessary, for carrying out routine control activities and/or by involving and supporting in a timely and contextual manner the expert personnel, so as to optimally integrate the hierarchical/vertical decision-making process in self-maintenance and self-repair actions.

## Description

The present invention relates to a method for managing a cyber-physical production system with predictive capabilities of abnormal operating conditions and an improved cyber-physical system operating according to said method.

The term "cyber-physical system" means a system wherein the "cyber" part, i.e., the sum of computational and communication capabilities, and the "physical" part, i.e. the part closely related to natural laws and their application in processes, are closely integrated both in terms of design and operation. According to a more detailed alternative definition, a cyber-physical system is a computer system that interacts continuously with a system composed of physical elements, each with its own computational capacity, i.e. its own capacity to process data, which combines computational, communication and control capacities, forming a distributed system that interacts directly and dynamically with the real world around it.

A cyber-physical system applied to the field of production constitutes a cyber-physical system.

From the hardware point of view, a cyber-physical system is a network of interacting elements with physical inputs and outputs.

The cyber-physical system comprises a software part for the said "cyber" part directed to the computational and communication processes related to all control, management and communication processes both between hardware operating units as well as between human personnel. This software part comprises the coding in machine language of the instructions with which the process is managed and with which the individual non-human operating units and human resources are organised, managed and controlled.

In order to improve the performance of production processes by considering them a combination of non-human hardware operating resources, i.e. automated production or process units and human resources intended to interact at different levels with the process functions performed by the non-human means of production, otherwise generically defined here as machines or even more generically as non-human operating units, the management systems of production processes have evolved from simple control software specifically designed for each operating unit or for a limited group of operating units and to support the execution of tasks by human operators who are separated from each other, often sharing input and/or output in a non-direct way, to complex integrated systems that manage a cyber-physical system in its entirety, being the control software dedicated to individual human and non-human operating units part of a unitary management system that provides for the interaction and common management of individual dedicated software.

It is clear that the integration in a common or integrated management system of cyber-physical operating units is extremely complex due to the great variety of non-human operating units deriving from different manufacturers and with different levels of intelligence, as well as with different stages of development. This difficulty is made even greater, when the management system of a production cyber-physical system also comprises the control and management of tasks integrated and synergistically synchronised and/or systematically orchestrated with the management of tasks and processes performed by human operators and this at any level of complexity of the task itself.

Document EP3674828 describes a method and a system according to said method for early determination of anomalies using a graphical user interface. The method described comprises receiving information about one or more characteristics of a cyber-physical system, defining a time period in which said one or more characteristics are to be monitored, generating a prediction of values of one or more of said characteristics of the cyber-physical system in said time period, which prediction is based on a predictive model. The method and the system described herein further provide for defining a threshold for the error value of each of said one or more characteristics within said time period and for determining an overall error of the prediction for all said one or more characteristics within said time period. The global error is compared with the error of each of said one or more characteristics, and the characteristic for which said difference exceeds said error threshold is considered as the source of a functional anomaly of the cyber physical system. This anomaly is reported in the form of a communication or alarm.

Generally speaking, a cyber physical system, and in particular a cyber physical production system, comprises a combination of technological entities and a combination of intangible entities.

Technological entities are non-limiting and more generally composed of one or more or a combination of the following objects
technological members i.e. members intended to perform activities of processing raw materials and/or constructive parts or of changing the functional state of a further technological entity;
technological bodies which have various functional states which may be modified by direct or indirect external action and which, depending on their functional state, effect changes in the state of raw materials and/or constructional parts and/or parameters of technological processes;
control units of technological members which, on the basis of external actions, modify the functional state of one or more said technological members;
communication units between one or more technological bodies and/or one or more control units, such as feedback loops;
sensors for detecting chemical or physical status parameters of raw materials and/or constructive parts and/or the status of a transformation process and/or a functional status of one or more technological units;
one or more logic processors for synchronised and organised control and management of the functionalities of each technological member and/or each control unit executing activity management programmes of the cyber physical production system in which instructions are encoded to make the cyber physical production system suitable for transforming the raw materials and/or constructive parts according to the technological construction and/or modification processes foreseen by the technological production process.

A cyber physical production system currently consists of a combination of physical hardware structures and intangible structures, i.e. software containing the control principles organised functionally to the desired chemical/physical effect of the entities comprising the hardware structure. From this point of view, a cyber physical production system is to be considered to all intents and purposes a 'computer implemented' type system and operates according to 'computer implemented' methods.

According to a further point of view, in agreement with the above, a cyber-physical system is an IT concept involving the integration of computer resources into physical processes. In such a system, sensors, equipment, and IT systems are often connected along a chain that goes beyond the boundaries of a single enterprise or company. These systems interact with each other via standard Internet protocols for prediction, self-regulation, and adaptation to change. Examples of a cyber-physical system are a technological system, the Internet of Things (including wearable devices) and the industrial Internet of Things.

Further examples of production cyber-physical system management exist in the state of the art and are configured to make predictions of operating conditions of the cyber-physical system both with respect to its individual component units and with respect to the system as a whole. Each of these systems operates according to algorithms and methods for defining the parameters and chemical/physical characteristics of the cyber physical system entities defined as one or more of the entities defined above, which are different from each other.

The representation of the reliability of the prediction as well as the representation of the parameters defining the key values for understanding the criticality of the values obtained from the prediction are also very different from case to case.

In the first analysis, state of the art methods stop at the step of reporting at most one situation, leaving the operators responsible for interpreting the results and making decisions based on the interventions to be carried out and the planning of these.

Moreover, in a broader view, cyber-physical production systems are not limited to purely production structures, i.e. to plants that are made up of a set of material technological operational entities that may be made operational in specific ways by control software, but must also consider those operational entities that relate to more intangible resources, i.e. to processes or parts of these or to single actions, i.e. tasks that must be performed by human beings and that still constitute steps in the production process.

These comprise all manual setting steps required in a system and which are preparatory to subsequent automated processing steps. These also comprise decision-making processes, the effect or result of which influences the operational/functional modes of the structural technological part of the physical cyber system or finalises its outcome.

For example, a production cyber physical system also comprises activities related to packaging, storage and handling of parts such as the transport of materials and/or parts and/or construction parts from a feed to a production and/or packaging line as well as the picking, delivery and transport of finished products and/or materials and/or parts and/or construction parts. These activities are normally carried out by human staff, but they are part of processes that are inseparably linked to the strictly production and/or machining processes, whose feasibility and workflow they influence. In addition to this, there are all the administrative processes linked to the purchase of materials, products or other elements necessary for the execution of the production or machining process, as well as the administrative processes linked to sales, such as the management of orders for their generation and issue as well as for their confirmation and authorisation to proceed on the basis of the payment of the amounts foreseen.

In particular, the procurement and management of the delivery process of materials or parts necessary for the manufacturing or processing process is a critical part of the production process at these times, which has an impact on the feasibility and also on the organisation of production plans.

An aspect of the present invention consists in improving a management system of the aforesaid type in such a way that it is extended to all the operational components constituting a cyber-physical production system, in particular with regard to the maintenance of said cyber-physical production system (also briefly defined as CPPS, acronym of the term Cyber Physical Production System) in order to improve the functional continuity and therefore the performances of the system itself.

In particular, the present invention is based on perfecting maintenance activities, whether automatic, semi-automatic or manual, by making them proactive and no longer just reactive as in the forms of method and system known to the state of the art.

A further aspect of the present invention consists in considering the physical cyber system of production in its entirety, providing tools for interaction with human personnel operating in the execution of collateral activities and completion of the industrial process of production, both for monitoring the operational status of progress of the execution of tasks, and with respect to indications or generations of workflow of intervention tasks.

In an exemplary practical view, the invention aims according to this further aspect to consider in the monitoring and forecasting, but also in the maintenance and/or repair interventions also those processes performed at least for a part by human personnel. This is possible, for example, thanks to the computerisation of the procedures associated with this type of intervention or action, which involve steps that are still not carried out today by automatic machines but by tools or machines controlled by human beings. Such procedures may consist, for example, in the processes of finding, ordering, transferring and physically supplying raw materials or construction parts to and from warehouses and production lines and/or also in the processes of taking finished products from production lines, and storing and/or shipping them to the final customer.

The above actions are just an example of activities that are carried out by human staff, since this type of activity is quantitatively and qualitatively dependent on the type of product and the level of automation of the production lines.

In concrete terms, by providing computer tools for the management and planning of these activities integrated in the cyber-physical system and consisting of management programmes equipped with data input and data output interfaces as characteristic parameters for measuring the operational status of the activities to be performed by human personnel, these activities are referred to a "computer implemented" type member which, like the technological members of the cyber-physical system, presents various numerically parameterizable indicators of the functional and operational status of the actions performed or to be performed and which also enables to introduce, by means of appropriate setting parameters, the workflows governing the activities to be performed by human personnel, in correspondence and synchrony with the production workflows of the production lines and the technological members constituting them.

The workflows governing the activities to be performed by human personnel are generated by means of management systems consisting of management software executed by computers and these have direct communication interfaces with at least some of the technological members comprising the production lines or indirect communication members, i.e. by manual input or manual transfer of information from output interfaces of the technological members to input interfaces of the management systems. Such systems may be defined in this description and in the claims as intangible production members.

It should be considered that such intangible production members as defined above are not equivalent with technological and/or intangible virtual members, since this definition, within the scope of the present description and the claims refers to the representation of the physical cyber system of production by means of logical software simulating said system which therefore constitute or generate as a whole a virtual model of the physical cyber system of production. It is clear that the management systems defined as immaterial members above are comprised in this model, even though, due to their computer-based nature, the relationship between the immaterial member and its virtual model is much closer and more direct than the relationship between the technological member and its virtual model.

A further aspect of the present invention consists in generating parameters for evaluating the performance of technological members and/or intangible members, which parameters are best suited to a method and a proactive system of automated, semi-automated or non-automated maintenance and repairing but managed by protocols for performing maintenance and/or repairing activities dictated to human personnel.

It should also be noted in this context that the term semi-automated comprises a combination of maintenance and/or repairing activities or tasks part of which at least is performed directly without human intervention by members adapted to perform the maintenance and/or repairing tasks, while the remaining part is performed by interventions consisting of actions performed by human personnel.

The present invention therefore aims at realizing a method for managing a production cyber-physical system with predictive capabilities of abnormal operating conditions, wherein,
the cyber-physical production system comprises a combination of:
technological bodies designed to perform activities of transforming raw materials and/or constructive parts or of changing the functional state of a further technological entity,
wherein the technological bodies have different functional states which can be modified by direct or indirect external actions and which, based on their functional state, effect changes in the state of raw materials and/or constructive parts and/or parameters of technological processes;
one or more control units of the technological components which, on the basis of external actions, modify the functional state of one or more of said technological components;
one or more sensors for detecting chemical or physical status parameters of the raw materials and/or constructive parts and/or status of a transformation process and/or functional status of one or more technological members
one or more logic processors for synchronised and organised control and management of the functionalities of each technological member and/or of each control unit executing activity management programmes of the cyber physical production system in which instructions are encoded to make the cyber physical production system suitable for transforming the raw materials and/or the constructive parts according to the technological processes of construction and/or modification foreseen by the technological production process;
one or more communication units between one or more technological bodies and/or one or more control units and/or one or more sensors and/or one or more control logic processors, comprising, inter alia, feedback loops, the units of which form a communication network linking said technological bodies, control units, sensors and control logic processors;
and which method comprises the steps of:
   (a) receiving information about one or more characteristics of a cyber-physical system in the form of one or more of said chemical or physical state parameters of raw materials and/or constructive parts and/or the state of a transformation process and/or a functional status of one or more technological members;
   (b) generating a prediction of the values of one or more of said chemical or physical state parameters of raw materials and/or constructive parts and/or the state of a transformation process and/or a functional status of one or more technological members at a future point in time based on historical data uniquely linking known cases described by combinations of said parameters at past points in time to abnormal conditions of the cyber physical production system recorded and stored in a knowledge database using machine learning algorithms;
   (c) determining whether the values of said parameters derived from the prediction correspond to an operational abnormal state of the cyber-physical system at the said future instant and/or at a different future instant of predicted occurrence of the abnormal event;
   (d) determining a list of which technological units and/or which control units and/or which sensors separately or in combination constitute one or more of the causes of the anomaly determined by the processing by a machine learning algorithm at the said future point in time of occurrence;
   (e) generating an alarm and/or information about the predicted event and the time instant of occurrence at which said event occurs.

According to the present invention, the cyber physical production system further comprises:
one or more automatic actuators for carrying out pre-established maintenance and/or replacement of technological components and/or sensors and/or control units and/or control logic processors;
a logic processor for controlling said one or more automatic actuators for performing said maintenance and/or replacement operations;
said control logic processor being interfaced with one or more of said control logic processors,
   said method further comprising the following steps:
   f) generating on the basis of the anomalies determined by the prediction and corresponding to the list of technological members and/or which control units and/or which sensors constitute separately or in combination one or more of the causes of the anomaly a task workflow of maintenance and/or repair and/or replacement actions in the form of a succession of commands of the automatic actuators for carrying out predetermined maintenance and/or replacement of the technological members and/or sensors and/or control units and/or control logic processors, which commands are generated and transmitted by said command logic processor;
   g) recording the aforesaid workflows of maintenance and/or repair and/or replacement actions in a record in a manner univocally linked to the aforesaid chemical or physical state parameters of the raw materials and/or of the construction parts and/or of the state of a transformation process and/or of a functional status of one or more technological members and to the values of one or more of the aforesaid chemical or physical state parameters of the raw materials and/or of the construction parts and/or of the state of a transformation process and/or of a functional status of one or more technological members and to the values of one or more of the aforesaid chemical or physical state parameters of the raw materials and/or of the construction parts and/or of the state of a transformation process and/or of a functional status of one or more technological members. of a transformation process and/or of a functional status of one or more technological members at a future time instant and to the condition of a possible state of anomaly of the cyber physical system at said future time instant and/or at a different future time instant as well as the list of which technological members and/or which control units and/or which sensors constitute separately or in combination one or more of the causes of the anomaly of the cyber physical system at said future time instants, into a record and
   (h) storing said record in the historical case database;
   (i) continuing with the activities related to steps (a) to (e) for the cyber-physical system on which steps (f) and (g) were performed;
   (j) in case of determination of a prediction of a further anomaly at the future time instants foreseen in the previous prediction step or at different and closer future time instants, label the workflows of automatic maintenance and/or repair and/or replacement actions as inadequate for at least some of the actions foreseen in said workflows and insert said labels in the corresponding record;
   k) generating a further alarm and/or report the event of ineffective or imperfect automatic maintenance and/or repair and/or replacement;
   l) possibly repeating the automatic steps f) and g), optionally subject to authorisation by human decision-makers and/or passing at least in part control of the maintenance and/or repair and/or replacement activities and optionally also of verification of the functional status to human personnel.

According to an improved embodiment, the method according to the present invention provides that the cyber physical production system further comprises:
intangible production members constituted by computer-executed management software generating workflows governing the activities to be performed by human personnel and having direct or indirect communication interfaces with the communication members of at least some of the technological members and/or control units and/or sensors and/or control logic processors and interfaces for input of status data of the activities envisaged in said workflows by the human execution personnel
said method further comprising the steps of:
   generating interactive and contextualised lists of information of at least part of the maintenance and/or repair and/or replacement steps, which are to be performed under direct control and/or by human personnel, said information comprising instructions specific to the maintenance and/or repair and/or replacement steps.

According to one embodiment, step d) is performed using root-cause analysis algorithms.

According to an exemplary embodiment, the machine learning algorithm may be selected from among the algorithms listed below or combinations thereof:
i) Machine Learning with Supervised Learning
ii) Machine Learning with Unsupervised Learning
iii) Machine Learning with reinforcement learning
iv) Machine Learning with semi-supervised learning. Obviously, the models of algorithms of Machine Learning highlighted above are to be considered not exhaustive and can comprise other types of algorithms currently known and also algorithms developed in the future and that prove suitable for the intended purpose or combinations of one or more algorithms.

According to yet another feature of the present invention which may be provided in any combination with one or more of the preceding features or variations in performance, the method further comprises the steps of measuring one or more parameters of state of the raw materials and/or of the constructive parts as a result of modifications carried out on the same by one or more of the technological members foreseen in the physical cyber system and/or one or more parameters of state of the raw materials and/or of the constructive parts as an input to the physical cyber system of production and/or parameters of state of the raw materials and/or of the constructive parts as an output from the physical cyber system. production cyber physical system and/or one or more status parameters of the raw materials and/or of the constructive parts entering the production cyber physical system and/or status parameters of the raw materials and/or of the constructive parts exiting the production cyber physical system and to use such status parameters in combination with the chemical or physical status parameters of the raw materials and/or of the constructive parts and/or of the status of a transformation process and/or of a functional status of one or more technological members as variables according to which the prediction of an abnormal operational status of the production cyber physical system is generated.

Also, the characteristic status parameters of the raw materials and/or construction parts in the various conditions of modifications exerted on them and/or unmodified or exiting the production process may comprise chemical/physical parameters of said raw materials and/or construction parts, as well as of the quantity processed per unit of time of said raw materials and/or construction parts.

According to an improvement, it is also possible to envisage measuring the chemical/physical parameters and/or the quantity per unit time of partially modified raw materials and/or constructive parts subject to rejection by the cyber physical production system, the latter being provided with technological members and/or immaterial members for checking and rejecting the at least partially modified raw materials and/or the at least partially modified constructive parts which do not meet modification conditions corresponding to those envisaged by the production process.

These parameters are then used to execute the previously described steps of the method in accordance with one or more of the execution variants or combinations of features described above.

An execution form of the present method provides for the generation of a virtual model of the cyber physical production system which virtual model is in the form of a program in which instructions are encoded for a computer to simulate the operational state and operational actions of the technological and intangible entities constituting the cyber physical production system such as in particular:
one or more technological members intended to carry out activities of transformation of raw materials and/or constructive parts or of modification of the functional state of a further technological entity, which technological members present different functional states which can be modified according to direct or indirect external actions and which, according to their functional state, operate state modifications of raw materials and/or constructive parts and/or parameters of technological processes;
one or more control units of the technological components which, on the basis of external actions, modify the functional state of one or more of said technological components;
one or more sensors for detecting chemical or physical status parameters of the raw materials and/or constructive parts and/or status of a transformation process and/or functional status of one or more technological members
one or more logic processors for synchronised and organised control and management of the functionalities of each technological member and/or of each control unit executing activity management programmes of the cyber physical production system in which instructions are encoded to make the cyber physical production system suitable for transforming the raw materials and/or the constructive parts according to the technological processes of construction and/or modification foreseen by the technological production process;
one or more communication units between one or more technological bodies and/or one or more control units and/or one or more sensors and/or one or more control logic processors, comprising, inter alia, feedback loops, the units of which form a communication network linking said technological bodies, control units, sensors and control logic processors together
one or more automatic actuators for carrying out predetermined maintenance and/or replacement of the technological parts and/or sensors and/or control units and/or control logic processors;
a logic processor controlling said one or more automatic actuators for performing said maintenance and/or replacement operations;
said control logic processor being interfaced with one or more of said control logic processors,
   said virtual model being configured corresponding to the chemical or physical state parameters of the raw materials and/or of the manufacturing parts and/or of the state of a transformation process and/or of a functional status of one or more technological members and/or one or more state parameters of the raw materials and/or of the manufacturing parts following the modifications carried out on the same by one or more of the technological members foreseen in the physical cyber system and/or one or more state parameters of the raw materials and/or of the manufacturing parts entering the physical cyber system and/or state parameters of the raw materials and/or of the manufacturing parts exiting the physical cyber system,
there being further provided the steps of verifying the effects of the maintenance/repair and/or replacement actions which are performed on said virtual model on the basis of a simulation of said actions on said virtual model and being measured thanks to the simulation by means of said virtual model the effects of said actions in future situations.

According to yet another execution form, the method envisages generating evaluation parameters of the operating conditions of said one or more technological members and/or one or more control units and/or one or more sensors and/or one or more communication units and/or one or more control logic processors and/or one or more maintenance/repair/replacement actuators and/or of said one or more intangible members in the form of so-called KPIs as well as global evaluation parameters of the performance of the cyber physical production system in the form of KPIs, said KPIs constituting the measurement metric for discriminating normal conditions from abnormal ones, said KPIs being calculated according to the following steps
segmenting the production process of the cyber physical production system into elementary processes whose interconnection generates the overall production process of the cyber physical system;
determining the efficiencies of the individual elementary processes in the form of KRIs (Key Result Indicators);
processing KRIs for the calculation of performance indicators (so-called PI);
extracting from the performance indicators, of key indicators in the process management and definition of the same as KPIs;
executing of a correlation process between KPIs, processes and data relating to one or more chemical or physical status parameters of raw materials and/or construction parts and/or the status of a transformation process and/or the functional status of one or more technological members as variables according to which the prediction of an abnormal operating status of the cyber-physical production system is generated;
identifying of KPIs to assess the system performance in real time and the future trend with reference to abnormal operating conditions.

With reference to yet another feature, which can be provided in any combination or sub-combination with the previous features and/or execution forms and variants described above, the method according to the present invention provides the steps of generating an IoT module in the form of a logic-functional element, which constitutes a universal communication interface according to the IoT protocol between a traditional sensor and the control logic processors and/or a computer intended to execute software in which instructions are encoded relating to the virtual model of the cyber physical production system and/or software in which instructions are encoded to execute the steps of the present method according to one or more of the features and/or variants and forms of execution described above.

According to an advantageous embodiment, the software in which are encoded the instructions for executing the steps according to the method of the present invention according to one or more of the features and/or forms and/or variants of execution more described above provides that said software is executed by an Edge Computing module interfaced with one or more of the control and/or command logic processors of the physical production cyber system and/or the virtual model thereof.

The invention relates to an improved cyber physical system operating according to a combination or sub-combination of the above described features and/or according to one or more of the above described forms and/or variants of said method, which system comprises:
technological entities intended to perform activities of transforming raw materials and/or constructive parts or of changing the functional state of a further technological entity,
which technological units have various functional states which can be modified by direct or indirect external action and which, according to their functional state, effect changes in the state of raw materials and/or construction parts and/or parameters of technological processes;
one or more control units of the technological components which, on the basis of external actions, modify the functional state of one or more of said technological components;
one or more sensors for detecting chemical or physical status parameters of the raw materials and/or constructive parts and/or status of a transformation process and/or functional status of one or more technological members;
one or more logic processors for synchronised and organised control and management of the functionalities of each technological member and/or of each control unit executing activity management programmes of the cyber physical production system in which instructions are encoded to make the cyber physical production system suitable for transforming the raw materials and/or the constructive parts according to the technological processes of construction and/or modification foreseen by the technological production process;
one or more communication units between one or more technological bodies and/or one or more control units and/or one or more sensors and/or one or more control logic processors, comprising, inter alia, feedback loops, the units of which form a communication network linking said technological bodies, control units, sensors and control logic processors together a computer into which is loaded a programme for predicting operating conditions of the cyber-physical system of production at predetermined instants of time now and in the future and which executes said programme,
in which program are encoded in a manner executable by said computer the instructions for making said computer capable of performing the following steps:
   (a) receiving information about one or more characteristics of a cyber-physical system in the form of one or more of said chemical or physical state parameters of raw materials and/or constructive parts and/or the state of a transformation process and/or a functional status of one or more technological members;
   (b) generating a prediction of the values of one or more of said chemical or physical state parameters of raw materials and/or constructive parts and/or of the state of a transformation process and/or of a functional status of one or more technological members at a future point in time as a function of historical data unambiguously linking known cases described by combinations of said parameters at past points in time to abnormal conditions of the cyber physical production system recorded and stored in a knowledge database using machine learning algorithms;
   (c) determining whether the values of said parameters derived from the prediction correspond to an operational abnormal state of the cyber-physical system at the said future instant and/or at a different future instant of predicted occurrence of the abnormal event;
   (d) determining a list of which technological units and/or which control units and/or which sensors separately or in combination constitute one or more of the causes of the anomaly determined by the processing by a machine learning algorithm at the said future point in time of occurrence;
   (e) generating an alarm and/or information about the predicted event and the time instant of occurrence at which said event occurs, and at which, according to the invention, the alarm and/or information is generated.
      and wherein according to the invention, the cyber physical production system comprises or is associated with:
      one or more automatic actuators for carrying out pre-established maintenance and/or replacement of technological components and/or sensors and/or control units and/or control logic processors;
      a logic processor controlling said one or more automatic actuators for performing said maintenance and/or replacement operations;
      said control logic processor being interfaced with one or more of said control logic processors,
      wherein said program for predicting operating conditions of said cyber physical production system further comprises, encoded in a manner executable by said processor, instructions for making said processor capable of performing the following steps:
   (f) generating, on the basis of the anomalies determined by the forecast and corresponding to the list of technological components and/or which control units and/or which sensors separately or in combination constitute one or more of the causes of the anomaly, a workflow of maintenance and/or repair and/or replacement tasks in the form of a succession of commands of the automatic actuators for carrying out predetermined maintenance and/or replacement of the technological components and/or sensors and/or control units and/or control logic processors, which commands are generated and transmitted by said control logic processor;
   (g) recording the aforesaid workflows of maintenance and/or repair and/or replacement actions in a record in a way which is univocally correlated to the aforesaid chemical or physical state parameters of the raw materials and/or of the constructive parts and/or of the state of a transformation process and/or of a functional status of one or more technological members and to the values of one or more of the aforesaid chemical or physical state parameters of the raw materials and/or of the constructive parts and/or of the state of a transformation process and/or of a functional status of one or more technological members and to the values of one or more of the aforesaid chemical or physical state parameters of the raw materials and/or of the constructive parts and/or of the state of a transformation process and/or of a functional status of one or more technological members of a transformation process and/or of a functional status of one or more technological members at a future time instant and to the condition of a possible state of anomaly of the cyber physical system at said future time instant and/or at a different future time instant as well as the list of which technological members and/or which control units and/or which sensors constitute separately or in combination one or more of the causes of the anomaly of the cyber physical system at said future time instants, into a record and
   (h) storing said record in the historical case database;
   (i) continuing with the activities related to steps (a) to (e) for the cyber-physical system on which steps (f) and (g) were performed;
   (j) in case of determination of a prediction of a further anomaly at the future time instants foreseen in the previous prediction step or at different and closer future time instants label the workflows of automatic actions of maintenance and/or repair and/or replacement as inadequate for at least some of the actions foreseen in said workflows and insert said labels in the corresponding record;
   (k) generate a further alarm and/or report the event of ineffective or inadequate automatic maintenance and/or repair and/or replacement action;
   (l) possibly repeating the automatic steps f) and g), optionally subject to authorisation by human decision-makers and/or passing at least in part the control of the maintenance and/or repair and/or replacement activities and optionally also the verification of the functional status to human personnel.

According to a further feature, the system may further comprise workflow management systems governing activities to be performed by human personnel, which systems comprise at least one computer into which workflow generation software is loaded and which computer executes said software,
in said software being encoded instructions for the computer to make it capable of generating interactive and contextualised lists of information of at least part of the maintenance and/or repair and/or replacement steps, which are to be carried out under direct control and/or by human personnel, said information comprising instructions specific to the maintenance and/or repair and/or replacement steps
one or more interfaces for direct or indirect communication of said computer with the communication members of at least some of the technological members and/or control units and/or sensors and/or control logic processors and interfaces for input of status data of the activities foreseen in said workflows by the human executing personnel;
one or more input and output interfaces with a human executor which interfaces provide for the output in human-intelligible format of said workflows and the input by the human executor in human-intelligible format of execution feedback of the tasks foreseen in said workflows,
and while said data is provided by means of a communication interface to the computer executing the program for forecasting the operating conditions of the cyber physical production system.

According to an embodiment, the computer executing said program for predicting operating conditions of the cyber physical production system is realised according to a configuration of Edge computing.

According to yet another embodiment, at least said computer executing said program for predicting operating conditions of said cyber-physical production system and/or said one or more automatic actuators for performing predetermined maintenance and/or replacement of technological members and/or sensors and/or control units and/or control logic processors; at least said one control logic processor of said one or more automatic actuators for performing said maintenance and/or replacement operations, are realised in the form of a separate retrofitting system of a cyber-physical production system, being provided with communication interfaces linking said separate retrofitting system to the pre-existing cyber-physical production system.

In particular, the communication interfaces of the separate retrofitting system connect said computer and/or said one or more automatic processing actuators and/or said one or more control logic processors respectively with the corresponding technological members and/or control units and/or measurement sensors and/or control processors and/or communication units comprising the cyber physical production system and possibly also alternatively with the corresponding virtual elements of the virtual model of the cyber physical production system.

The above also applies to the intangible parts, as defined above, and to the systems for generating workflows of human maintenance/repair/replacement activities and reports of completion of said activities.

In particular, the workflow generation systems for maintenance/repair/replacement activities relating to intangible members and tangible members may consist of separate systems from the cyber physical production system and/or the separate retrofitting system or be comprised as software modules within the latter.

Further features and/or execution forms and execution variants of the method and the system are the subject of the dependent claims.

From the foregoing, the advantages of the present invention are apparent and are summarised in the following list:
Improved functional continuity (in terms of availability) of the physical production cyber system (production machinery and supporting computer system), assessable by defining appropriate metrics for measuring the availability of both physical and intangible components, as well as of the physical production cyber system as a whole.

Improvement of detection and reaction times to malfunctions both when managed in an almost purely automatic way and improvement and through interventions mainly managed by technical personnel, but with the operational and documentary support provided by the method and system according to the present invention.

Better evidence of the correlations between causes and effects related to the criticalities detected in the detection phase both autonomously by the process/service by means of suitable analysis techniques and by means of investigation conducted in interactive collaboration between the system and technical personnel.

Improved effectiveness and control of the decision-making process resulting from the detection of criticalities.

Exploitation of the interaction and synergies between processes through the orchestration of users and activities aimed at the extended maintenance of all assets constituting the cyber-physical production system; such interactions and synergies can be qualitatively assessed through appropriate interfaces for monitoring and supervising the current state of the orchestrated criticality management workflows, as well as through quantitative measures and indicators relating to the execution (timing, inputs, outputs) of the individual tasks constituting these flows.

Predictive rather than reactive approach to CPPS maintenance, even if limited only to the verification of the existence, quality and completeness of the input data necessary for the malfunction prediction process (anomaly detection phase), as an extension and completion of the Root-Cause Analysis theme

Possibility of structuring the components relating to the collection of the measured parameters and/or to the steps of prediction of the operating conditions according to one or more of the above characteristics and/or forms or execution variants as well as the components related to automatic, semi-automatic and non-automatic maintenance/repair/replacement actions as a separate system that can be interfaced with any existing cyber physical production system for retrofitting the same.

The term "retrofitting" refers to an upgrade of existing cyber physical production systems and/or systems manufactured according to non-current models to one of the configurations contemplated by the present invention according to one or more of the preceding embodiments.

The foregoing also with reference to the intangible components as defined above and to the systems for generating workflows of human activities of maintenance/repair/replacement and reports of completion of said activities.

The features and advantages of the present invention will be more clearly shown by the following description of some execution examples illustrated in the attached drawings:
Figure 1 shows schematically the technological application scenario of a production cyber physical system comprising a system for determining a normal or abnormal condition of said cyber physical system according to the present invention
Figure 2 shows a detailed block diagram of the system according to the present invention.
Figure 3 shows a block diagram of the general architecture of an execution example of a detail of the prediction and maintenance/repair/replacement system according to the present invention.
Figure 4 is a functional diagram of the architecture according to figure 3.
Figure 5 shows a block diagram of the logical functional elements of an execution example of an IoT module of the present invention.

With reference to the description of the detailed example implementation this is to be considered in a way that is not limiting, but only illustrative for the branch technician and the technical information is provided to the extent that the branch technician can implement the invention by drawing on his basic technical knowledge without having to perform any inventive step or research and development.

With reference to the described architecture, this is only illustrative, as many alternative choices are possible, which are within the average capabilities of the branch technician and his basic technical cultural background.

In relation to the realisation of the hardware structure and of the specific software writing, it is possible to use all the different technologies available today, from which the technician of the branch can freely choose, being the choice and the combination of the different components left to opportunity considerations dictated by the contingent application conditions and by the pre-existing conditions as regards the hardware and software infrastructures already present in a company or that the company intends to acquire.

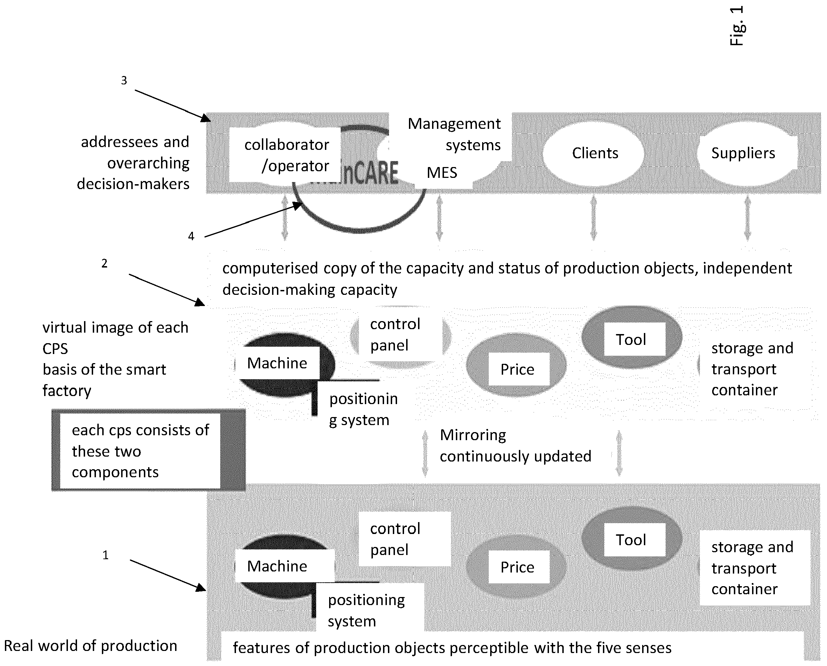

With reference to the above, Figure 1 shows a high-level example of a cyber physical production system. Field 1 shows the hardware structure indicated as protection objects perceptible with the five human senses, i.e. the physical production infrastructure.

Field 1 lists, by way of example and not as an exhaustive list, some of the possible components of this structure with reference to a manufacturing production system.

Generally speaking, this comprises various technological bodies capable of influencing the chemical or physical characteristics of a workpiece designated 101.

Although only one element of each type is indicated in the example, it is clear that in an automated production line performing various actions on the workpiece 101, more of the listed technological members are present and that therefore the indication in the singular also extends to the combination in any way of a plurality of the listed elements.

By 201 is indicated a generic machine apt to perform functions both on the piece(s) 101, and on other elements as in the case, for example, of control units and logic processors controlling the indicated elements and/or in the case of actuators for adjusting and/or repairing and/or maintaining and/or replacing one or more of the elements comprising the cyber physical production system 1.

By 301 are indicated the positioning and/or transport systems present in a production line constituting a cyber physical production system. These positioning systems 301 also comprise any systems for picking up, delivering and removing elements of the cyber physical system and/or parts of said elements for performing maintenance and/or repair and/or replacement of said elements. Number 401 denotes control panels, i.e., man/machine and machine/human interfaces that are provided for traditional operations of signalling the operational status of technological elements and/or entering setting data and commands to said technological elements. 501 means one or more tools that act directly on the part(s) 101 and also comprises tools of any kind designed to perform maintenance and/or repair and/or adjustment and/or replacement operations on or of one or more of the elements of the cyber physical production system 1.

Finally, the term storage and transport container denoted by 601 refers to all elements pertaining to storage and transport systems from the warehouse to the production line and/or vice versa, as well as all elements necessary to keep track of the number and/or position of the stored parts. This term 601 refers not only to the parts understood as raw materials and/or constructive parts subjected to processing in a machine or in a production line, but also to any elements of the cyber-physical system envisaged to replace the operating ones and/or to parts of said elements.

Moreover, in an enlarged view of the definition of cyber physical production system, it is also possible to envisage as falling within the term 601 also the means of transport and/or shipment of the finished parts to a customer or to a further processing site extraneous to the organisation governing the cyber physical production system.

In an even broader concept and according to an embodiment that can be envisaged in combination with one or more of the embodiments described also in combination with one or more of the combinations of features that are the subject of each or one or more of the claims, it is also possible to consider integrating the cyber physical production system several production lines located at different geographical sites and under the control of different business organisations that cooperate in a succession of processing steps each to perform a processing step in a complex process of working from raw materials and/or construction parts to finished products.

The further component of the cyber physical system is the virtual representation of the hardware and software, which consists, for example, of a functional and status simulation programme of the entire hardware of the cyber physical system and the associated control software.

This virtual model operates in a completely parallel manner to the hardware structure and can simulate the operating conditions of the hardware at a precise moment in time, for example on the basis of status data of the technological components that make up the hardware and software of the production cyber physical system either obtained from stored databases or measured in real-time, or on the basis of a combination of these data.

This virtual model is denoted by 2.

At layer 3, decision-making entities are indicated which influence the management of the cyber-physical production system on the basis of various conditions, such as but not limited to, lists of orders to be executed, i.e. to be put into production, delivery times, availability or procurement of raw materials and/or construction parts necessary for production activities.

These decision-making bodies are indicated purely by way of example and may be supplemented by further bodies in cases of different types of instructions.

These entities may be either automated entities, such as computer-based management systems running business management software, or entities run by human personnel operating, for example, on management software, which, however, are only systems for collecting and storing data that are controlled by human personnel and not independently and autonomously from automated management systems.

The physical cyber system through its virtual model, which is intrinsically linked to the hardware-software structure of the real production model 1, provides the management entities with information regarding the operational capabilities and operational status of the physical cyber system, as a whole and for each technological member composing it. On the basis of these data, the management entities make decisions in relation to the planning of production, to the forecasting and planning of activities of maintenance and/or repair and/or replacement of technological members and also in relation to the control and planning of activities of procurement of raw materials and/or constructive parts which constitute the starting materials of the production processes.

Within the scope of the present invention, between the cyber physical system 1 and 2 and the decision-making bodies, a further system for monitoring the operational status of the production system and/or of some technological members thereof and for maintenance and repair is provided, this is globally indicated with 4 and is identified by the term "MAINCARE", i.e. main protection module.

Generally speaking, the present invention therefore envisages that the cyber physical system 1, 2 of production is not managed solely by one or more management entities that govern the planning of the activities and the workflows thereof, but that a further entity is added to these entities, constituted by a monitoring and identification system of the operational status of the cyber physical system and of the members composing it, which provides the one or more management entities with further processed information regarding the health conditions of the production system and of its hardware and software components, which manually or thanks to automatic or semi-automatic routines provided in the management programs initiate maintenance and/or repair and/or replacement actions.

Advantageously, thanks to a baking software, the said entities or management systems can organise the execution of the aforesaid maintenance and/or repair and/or replacement activities in a time-synchronised manner with the time sequences of execution of orders and/or replenishment of raw materials and/or construction parts and/or with the time schedules related to the maintenance and/or repair and/or replacement activities.

The monitoring, maintenance and repair system 4 therefore interposes itself between the traditional management systems that can be completely or partially replaced by said monitoring, maintenance and repair system 4, for at least some activities and that when an automatic and autonomous monitoring, maintenance or repair action is not foreseen or is not possible, activates intangible bodies of support, suggestion and orientation of the management activities performed by the human personnel.

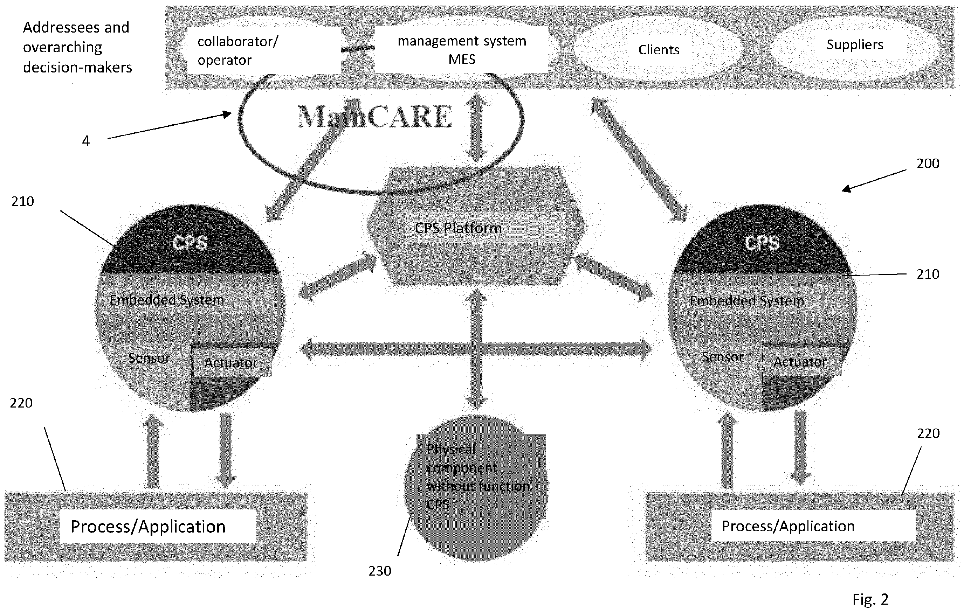

Figure 2 is a more specific level of detail than figure 1 and shows better where the monitoring, maintenance and repair system is placed in the system that comprises the cyber physical production system and the business management system.

Figure 2 shows the positioning of the monitoring, maintenance, and repair system in the technological application scenario.

200 indicates the physical cyber system. The CPS platform (cyber physical system) operates one or more production hardware cyber physical systems indicated by 210 comprising in a simplified and illustrative manner sensors and actuators for executing the production processes and/or applications indicated by 220. The overall cyber physical system 200 further comprises physical components that do not have specific functions in the process carried out by the same and are denoted by 230.

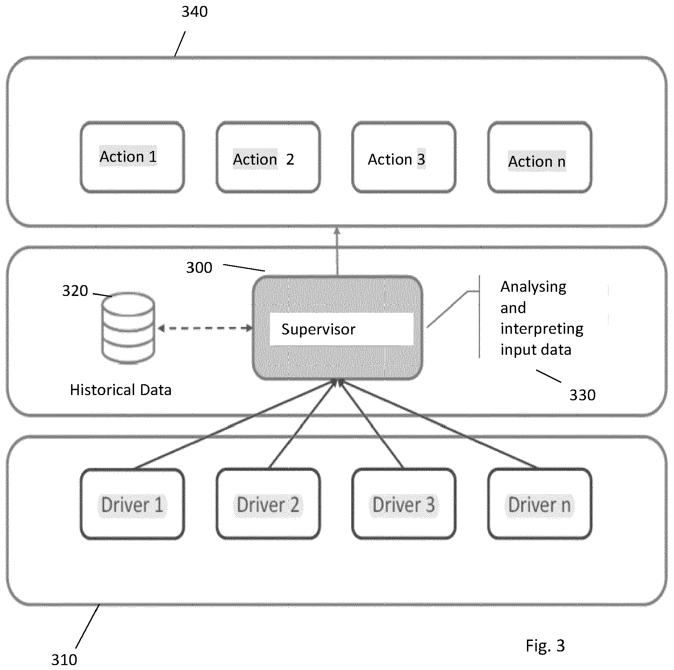

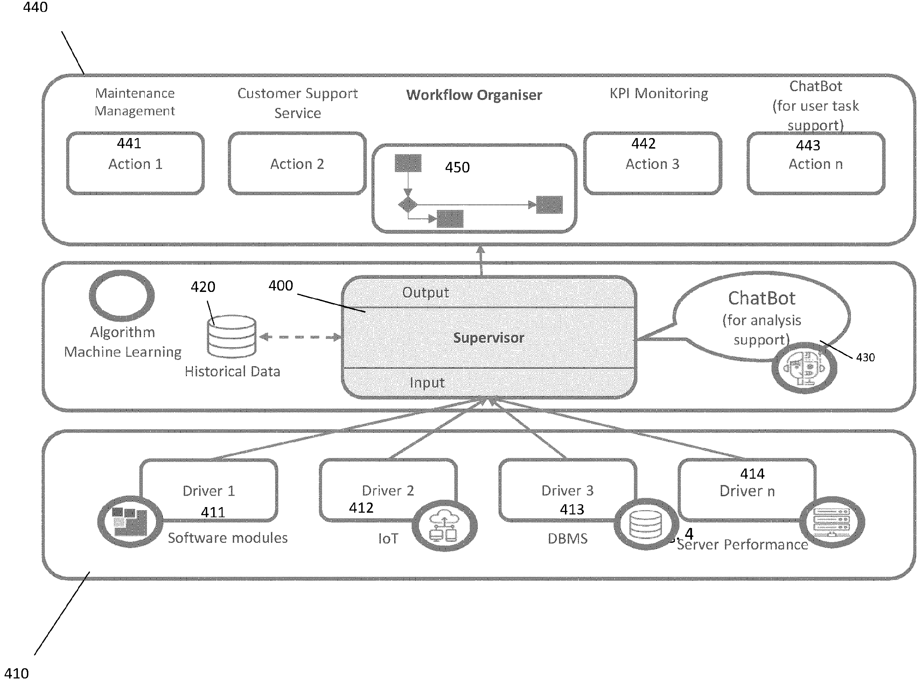

Figures 3 and 4 show detailed block diagrams of an execution example of the architecture of the monitoring, maintenance, and repair system 4. Such an architecture in principle constitutes one execution example among several options and is in the form of a hardware/software system of the implemented computer type.

A processing and control system 300 referred to as supervisor and consisting of a combination of generic hardware executing a processing and control program in which instructions are encoded to make the generic hardware capable of performing the monitoring, maintenance and repair functions to be specified later interfaces with one or more input drivers 310 which may be either sensors, or more complex information systems for data collection and which provide the supervisor 300 with the values relative to the pre-established variables to be monitored and which characterise the operational health status of the cyber physical production system and of its components, i.e. of the technological and intangible members as defined above in the course of this description and introduction.

The supervisor system 300 is associated with a memory of historical data indicated with 320 which comprises a database of information and in particular comprises data relating to the characteristic parameters monitored and to the corresponding conditions or status of the relative cyber physical system which derive from known cases and for which the effects of possible maintenance, repair and/or replacement actions of technological or intangible members and the relative intervention times are known, as well as possible consequences also in future instants of failed maintenance, repair and/or replacement activities and the times within which such consequences occurred.

Preferably between the database 320 is constantly updated both with data relating to ongoing activities on the monitored cyber physical production system and possibly also with data from other similar cyber physical production systems.

When, for example, the plant is supplied by an organisation, it is possible that this organisation will take charge of adapting and supplementing the knowledge base of known cases, i.e. the historical database 320 with data relating to new cases from a set of third party cyber physical systems that are under its management or that have been supplied by the same organisation to different customers.

The program executed by the supervisor 300 also comprises routines 330 dedicated to the analysis and interpretation of the data provided by the drivers 310.

In particular, said routines comprise instructions that encode the execution by the hardware of the supervisor 300 to the execution of one or more machine learning algorithms. These may be algorithms of different types that are instructed on the basis of the database 320 of historical data and may also comprise a combination of several machine learning algorithms operating in succession or in parallel with each other.

A definition of possible machine learning algorithms on a general level has already been given in the previous introductory part of this description. In further specification, these algorithms may consist of, or comprise alternatively or in combination with each other, algorithms or predictive algorithms, such as neural networks, genetic algorithms, classifiers, optimisation algorithms, cause-root analysis algorithms and others known or developed in the future, from which, based on the known technical specifications of the said algorithms, the technician in the branch is able to choose without having to perform any inventive activity.

As will become clearer later on with reference to figure 4, the outcome of the aforesaid processing activities is provided in the form of commands to automatic or semi-automatic actuators or intangible bodies, such as a chatbot or a communication containing a list of tasks to manual executors. Such commands or task lists relate to actions imposed or suggested by the supervisor 300 as a result of the analysis activities performed on the monitoring data provided by the drivers 310 and analysed based on the historical data 320 thanks to the algorithms 330. In the block diagram of Figure 3, 340 denotes the set of actuators and/or automated repair/replacement systems or workflow information/generation systems for performing manual interventions by human personnel, and these actuators and/or automated systems and/or workflow generators are referred to as actions.

The functions of the monitoring, maintenance and repair system can therefore be summarised as follows:
Collecting, structuring and clustering input information such as real-time data and calculated data;
Examining this data by means of analysis and classification techniques, in order to identify any correlations between the monitored variables, and trend analysis on the basis of historical data;
Carrying out a diagnostic analysis (of the cause-and-effect type) of the current state of the system in order to attribute, with a pre-established degree of reliability, the causes of the malfunctions detected or expected;
implementing and/or suggest and/or plan one or more interventions such as:
   generation of alarms, with the possibility of punctual involvement of the personnel in charge;
   guided execution of the repair/restoration intervention so that the reference end-user is guided through standard procedures in solving the problem;
   execution of targeted automatic intervention and event management actions.

Figure 4 shows a more detailed implementation example of the system according to the present invention which relates to an execution form of the system in which maintenance, repair and/or replacement activities of one or more components of the cyber physical production system are carried out in a manual manner by dedicated technical personnel. This solution is the most directly applicable also in the form of retrofitting, i.e. upgrading or integration, for already existing systems and which requires a relatively contained level of investment in terms of hardware, since it is not necessary to foresee automatic actuators to carry out part of the maintenance, repair or replacement of the technological components, i.e. the technological bodies of the physical cyber production system.

Similarly to the previous more general example, the supervisor 400 identified herein as the notification engine performs the function of collecting via the drivers 410 and interpreting the monitored input information and, based on the outcome of the processing of such data, to determine and transmit which actions 440 to activate on the production cyber physical system.

The notification engine, therefore, comprises the analysis and prediction modules described with reference to the generic example of Figure 3 and which are implemented according to one or more of the variants described with reference to said previous example. The machine learning algorithms operate as in the previous example by means of training by means of the data of known cases contained in the historical database 420.

In parallel, the notification engine 400 communicates with, or performs itself an intelligent system of interface with human users in the form of a chatbot as indicated with 430 and which is specifically suitable to make interactive the activities of analysis and interpretation of the data performed automatically by the machine learning algorithms making possible also a manual human intervention which can if appropriate also completely override the suggestions provided by the algorithms and/or modify them at least partially and/or also modify the setting conditions or the type of algorithms or combinations of algorithms used, intervening also possibly on the data taken from the historical database 420. Such interventions may consist of a further filtering of the data of the historical database before their use as a training database of the machine learning algorithms or, for example, also of a reduction of the number of records to be used by selecting records relating to specific cases of operating conditions or types of cyber physical systems which, for various reasons, are considered to be more similar to the cyber physical system under examination.

According to one possible implementation form, the notification engine is in the form of an edge computing component.

As previously described also in this example, the drivers 410 enable the sensing of data, such as sensors for sensing state parameters of the technological members of the system and/or also of the products being processed and/or finished products and/or raw materials and construction parts entering the production process. Furthermore, said drivers 410 may comprise systems for interfacing with components external to the cyber physical production system, which may be hardware components such as sensors or systems for managing inherent or collateral activities, but synergistically related to the management of the cyber physical production system.

In this example, 411 denotes modules that provide data related to production plans and/or production progress and performance data and/or action information and related maintenance data.

414 denotes a system for monitoring the hosting hardware and software modules running on the same, such as CPU occupancy, memory occupancy, hard disk status, and similar data.

412 denotes components such as sensors or the like for collecting data on the operational status of the components of the production cyber physical system, which in the specific example comprise, by way of example, IoT elements.

Instead, 413 denotes a system for managing the database of historical instances, e.g. regarding to the performance and status, as well as loading new data.

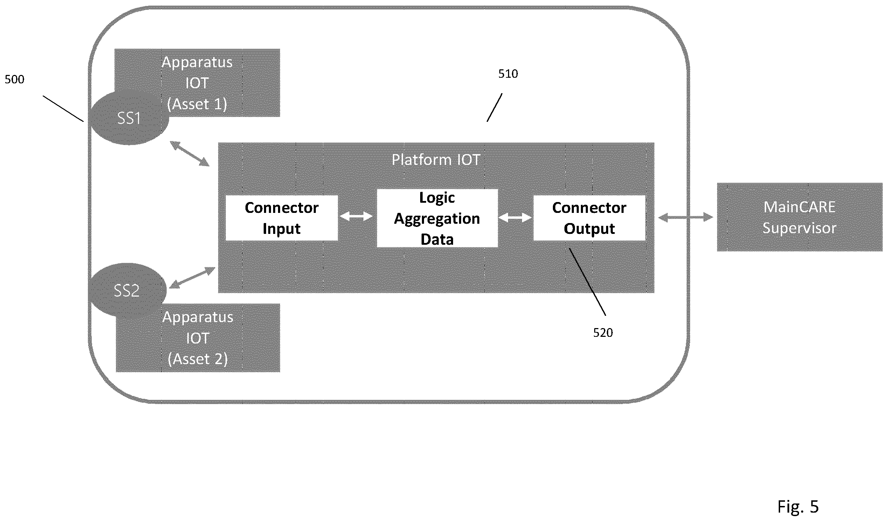

In particular, an advantageous but not limiting example of the logical-functional elements of the data collection system which, as a whole, will constitute the IoT module is illustrated in the following figure 5. In detail, the smart sensors (500) indicated with SS1, SS2, ..., SSn are highlighted, which are electronic devices capable of monitoring the tangible assets of a cyber physical production system, i.e. the characteristic parameters for the functional status of the system itself and/or for each of the components, i.e. the technological members and/or the intangible members of said system. According to the illustrated non-limiting example, these smart sensors can be based simply on traditional sensors to detect and transmit temperature, pressure, etc. The measurement data are exchanged according to the IoT paradigm through a specific communication interface that can be based on industry standard protocols (e.g. MQTT). The data coming from the different Smart Sensors SS1, SS2,...,SSn are collected and appropriately aggregated by a middleware component (typically an IoT platform) 510, also deployable on embedded devices, able to manage both wireless and wired transmission means and exchange information with the supervisor 330, 400 by means of an appropriate communication channel based on message queues 520.

In the example of figure 4, the results of the analysis and interpretation of the monitoring data collected by the drivers 410 are provided to a planning module 450 which, on the basis of the analysis and interpretation data, provides for the definition and orchestration of intervention processes, understood as an intelligent succession of manual and/or automatic tasks (workflow) aimed at solving the detected or expected problem. Not necessarily all processes need to be orchestrated, some elementary actions may be controlled directly by the Supervisor 400. Operating based on a definition and implementation of pre-set specialised workflows, the above-mentioned system enables the structured management of the maintenance of the monitored cyber physical system by guiding the repair/restoration operations. This system is indicated with 450 and is in the form of a generic hardware, for example the same hardware of the notification engine 400, and a software in which the instructions are codified to make said hardware capable of performing the orchestration functions described above.

The commands or workflows coming out of said scheduling system 450 are provided in different forms to the automatic or human actuators, in this example only human indicated globally by 441.

According to an execution form, a specific actuator is intended for the calculation, monitoring and analysis of KPIs (key performance indicators) indicated by 442 and whose functions will be specified below.

In combination or separately, the actuators may also comprise a chatbot 443 supporting the maintenance and/or repair and/or replacement activities defined in the workflows provided by the planning system 450.

With reference to the chatbot, this chatbot may be part of the same chatbot system comprising also the chatbot for analysing and interpreting monitoring data of the cyber physical production system or said chatbot 443 may be completely independent from a software and/or hardware point of view.

With reference to the execution form in which there is a single multifunctional chatbot, i.e. having the functions of both the chatbot module indicated with 430 and the chatbot module indicated with 443, this chatbot performs a dual function of analysis and support, being dedicated to the guided resolution of the problem by the user according to standardised procedures, as well as to the collection of feedback regarding the intervention on the problem itself. In this execution form, therefore, it is a virtual assistant that interfaces in an effective and user-friendly way with the technical staff involved in the management of the production system, both to guide them in the analysis and search for the root cause of the problem found by the analysis of the monitoring data, and to actively support them in the resolution of the said problem and therefore in the execution of the workflows suggested by the 450 planning system.

Thanks to the use of chatbots as actuators, a new kind of interaction is created between the technical capabilities of machines and the cognitive flexibility of human beings. Chatbot technology, possibly extended up to Natural Language Processing, plays an important role in the implementation of the method and system according to the present invention as it allows the method to be applied in a less costly version of the system, when automated maintenance, repair or replacement actuators are not available or when investments involving the acquisition and upgrade of the cyber physical system with such actuators and their control units cannot be made.

Both in the execution form of Figure 4, which envisages only manual and human maintenance and/or repair and/or replacement interventions, and in the execution form in which at least part of the maintenance and/or repair and/or replacement activities are automatic while the remaining are manual, the chatbot acts as a real-time assistant to the technical staff, and this support is related both to the execution of interventions on the system by autonomously performing simple and repetitive tasks or guiding the staff in the resolution of more complex problems, and to the activities of cause-effect analysis for the collection/structured search of information about the events occurred.

In the field of data analysis and interpretation, the action carried out by the supervisor 300, 400 can thus be dynamically integrated with the action of the technical personnel in charge of managing the cyber physical production system.

The Chatbot can be dedicated to interactive Root Cause Analysis and on the basis of the analysis of historical data relating to problems that have previously appeared, been analysed and possibly solved, it is configured to ask the user questions to analyse the problem that has occurred in greater depth, suggesting possible solutions and at the same time exploiting its experience to feed its knowledge base.

As far as maintenance actions are concerned, the chatbot allows the user to contextualise the problem and identify the links between the recurring questions of the maintenance and/or repair and/or replacement workers when performing the tasks of the provided workflows. In this case, chatbots allow the formalisation of intervention reports in a structured way. Such formalisation creates a more user friendly environment for the presentation of the tasks to be performed and at the same time allows the machine learning algorithms to recognise the information present and the related variables and to collect them for recording as records in the database of historical cases 320, 420.

It is possible to envisage using alternatively or in combination two types of chatbot technologies, such as the conventional NLP type or the Q/A (question/Answer) type, with a probabilistic decision-making process or a tree of defined rules, equipped with a pre-training mechanism.

The training can take place on a knowledge base using relational databases (SQL), which facilitates the chatbot's task of 'remembering' previous conversations, so as to make the current one more fluid and meaningful.

This knowledge base can be stored in the database of historical cases 320, 420 or in a separate database, which can be interfaced or cross-referenced with the database of historical cases.

Possible chatbots that can be used as the basis for developing a chatbot according to one or more of the described forms of execution are for example and not limited to the BOT provided by Microsoft Azure, on the Microsoft Phyton development environment, or on open source environments such as NLP toolkit or others.

Generally speaking, the chatbot is developed with reference to the application scenarios defined by the cyber-physical production system under examination and the characteristic variables that define its operational status at an overall level and of the individual technological and/or immaterial bodies that make it up.

This operation entails the definition of the characteristics that must be stored in the knowledge base, i.e. data types, relative attributes and/or characteristics, semantics and/or particular syntaxes for the identified application field. This also defines the data retrieval method and the organisation of the data in the database records.

The configuration of the chatbot then takes place in relation to the specific definition of the chatbot components, i.e.:
intents, i.e. the classification of the intentions of sentences or questions, such as the class "alarm on the operating temperatures of a machine";
   entities that allow the specific context of the question to be defined, e.g. "the machine under inspection by the operator of that machine";
utterances that are specific phrases, questions within an intent or a category, such as the question "is it correct that the temperature of machine X (where X is defined by the associated entity) is above the value Y?".

These activities lead to the definition of the requirements of the learning system, and to the formalisation of the learning modes of the chatbot.

The chatbot is also configured to interface with components such as drivers and actuators, in particular IoT, and the consequent organisation of knowledge bases, for the management of tangible assets, and with databases containing the information of a support system for the management of intangible assets.

Regarding the actuator 441 intended for calculating, monitoring and analysing KPIs, according to an embodiment, which is also not limiting, but only exemplifying the present invention, a new metric for defining KPIs is used.

These new metrics are based on the fact that when faced with complex and interacting processes, such as those carried out on a cyber physical production system, it is difficult to obtain a detailed explanation of what is really happening just by observing pre-selected KPIs, even more so if such KPIs are to be used with the aim of predicting a subsystem malfunction. In fact, if any business intelligence (BI) system can display the operational metrics of the context of use, these must be interpreted by humans, who must first focus on the processes to be observed and agree on the meaning that the same metrics will have for different users.

Therefore, according to this aspect of the present invention, new metrics and KPIs are defined to be able to represent, with a certain level of fluidity and consistency, interconnected physical and virtual processes. Compared to the classic way of defining and measuring KPIs, this example uses an approach to determine them that involves an indirect method of calculating KPIs that starts from the elementary processes that the physical cyber production system monitors in the form of Key Result Indicators (KRI). These are then used by the second level, that linked to the performance indicators (PI) which are usually accompanied by data processing. The third level is responsible for extracting, from these indicators, those that are key to the management of the process, i.e. the KPIs.

An example of correlation between KRIs, PIs and KPIs in the manufacturing context can be described according to the ISO22400 standard.

By performing a reverse analysis process, i.e. from the bottom up, it is possible to evaluate the learning and prediction capabilities of the monitoring, maintenance, and repair system according to the present invention and in this embodiment.

From the foregoing, the advantages of the method and the system for implementing the same according to the present invention are apparent.

The system according to the present invention enables management of critical issues of a cyber physical production system according to different levels of automation.

The method and the system allow obtaining the following management advantages of the cyber physical production system according to any form or level of automation of said system:
Improved functional continuity of the cyber physical production system (production machinery and supporting IT system), which can be assessed by defining appropriate metrics for measuring the availability of both physical and intangible components, as well as of the cyber physical production system as a whole.

Improvement of the detection and reaction times to malfunctions and improvement of the resolution times of the criticalities detected, both in the case of interventions mainly managed by technical personnel, and in the case of at least partially automatic interventions.

Improved evidence of correlations between causes and effects related to criticalities detected in the detection phase, both independently by the process/service through appropriate Root-Cause Analysis techniques, and through investigation conducted in interactive collaboration between the system and technical staff through chatbot technology;

Improved effectiveness and control of the decision-making process resulting from the detection of critical issues;

Interaction and synergy between processes through orchestration of users and activities aimed at extended maintenance of all assets making up the physical cyber production system;

Predictive rather than reactive approach to CPPS maintenance, although limited only to checking the existence, quality, and completeness of the input data necessary for the malfunction prediction process (anomaly detection phase), as an extension and completion of the Root-Cause Analysis theme.

With reference to the execution examples and to the more general configurations of the method and of the system according to the present invention, in relation to the feature which sees the inclusion of intangible production members in the cyber physical system, for monitoring and controlling activities carried out by human personnel also defined as manual or intellectual activities, such as those decided in the previous description, it is envisaged that said intangible members present communication interfaces with human personnel, which interfaces are configured to indicate to a user specific data with the function of the same and to request from the user actions, chosen from lists of options to said user inherent to the function of the same in the organisation managed by the cyber physical production system in its extended form as described above in its different execution forms and variants.

Such intangible members are in the form of software executed by processing units forming part of the material or hardware members of the cyber physical processing system and allow interfacing with the human user in such a way that the activities of the human user generate measurable and parameterised feedback fully equivalent to a status or control signal from a material hardware member , such as a sensor and/or actuator or the like.

In relation to activities linked to actions to be performed manually or by means of activities at least partially performed by a human being, it is possible to provide a communication robot with the user intended to perform said actions which contains a warning or an indication relating to the fact that an action must be performed, and in relation to this indication also information on which action, in which context, in which place, for which step of a production and/or maintenance workflow and/or at which time instant.

The choice of communication with human personnel and with a user called to perform a pre-established activity is preferably that of a chatbot, which is an operational communication unit that provides already pre-programmed all the statistically most probable alternatives in relation to the condition that generated the said indication of execution of a certain activity and optionally the related information, the chatbot being also equipped with a data input interface and a processing engine of the same that are requested from the user or that the user wants or is obliged to provide to the system for the correct execution of the activity.

Thanks to the chatbot, human activity is integrated into the hardware system, largely overcoming the limits of arbitrariness and therefore uncontrollability of human activities, without dehumanising these activities.

In addition, the chatbot can integrate security systems that prevent errors in the execution of activities that the user or human service personnel are called upon to perform.

According to yet another form of implementation, the immaterial member may also comprise a device that can be associated with each of the individuals operating in the production system, for instance a wearable system that detects physical parameters, such as position, movement of the user, also with respect to operational units of the physical cyber system for which the said activity is to be performed.

In this case, the chatbot can recognise the individual, to verify if he/she is reaching a specific location or a specific production member as an operational unit of the cyber physical system, or even a specific device.

Moreover, according to a further feature depending on the functions attributed to the individual, the said production member (s) and/or the said operating unit(s) and/or one or more devices are also provided with communication systems that communicate and/or detect with the devices associated with the individual for the verification of the execution of the activities indicated by the intangible members, i.e. the chatbot.

It is clear that the immaterial members in the form of, for example, chatbots constitute a computer-implemented device for detecting, monitoring and verifying the activities performed by human personnel.

From the above, it is also clear that intangible members in their more general definition and also chatbots as a specific form of implementation also operate at the level of purely intangible activities, such as activities relating to individuals called upon to perform managerial and/or management and/or marketing and/or commercial activities. In this case, the intangibles report these types of actions, with respect to their execution, execution times, execution dates, and results having an influence on the production activity of the cyber physical system within the scope of parameters that can be processed by the cyber physical production system in the same way as parameters detectable by sensors and commands executable by actuators of the physical components of the cyber physical system, as production operational units according to one or more of the definitions and examples described above.

With respect to the above machine learning algorithms, combinations of these algorithms are advantageous, as they allow for prediction without the need for costly supervised training.

In an execution form, it is possible to envisage a combination of a classifier, such as a neural network or similar, and a genetic algorithm.

The genetic algorithm may be used to generate from a set of state data of a cyber physical system consisting of values of parametric variables obtained from sensors measuring chemical/physical parameters of the technological bodies and/or values of parametric variables measuring input data provided by the intangible bodies either by means of sensors associated with the latter or by manual inputs and one or more variables defining an output predictive of the operational status of the cyber physical system as a whole and/or of parts or elements of said system and/or of maintenance activities to be performed and/or of the probability that said system will be subject to slowdowns or shutdowns within a certain time.

Such data may be gathered from the experience of a traditional management of a physical cyber system. The genetic algorithm is capable of reconstructing virtual training data sets that can be combined into future generations of iteratively defined training data sets.

The genetic algorithm can provide a set of training data that can be used for training a classifier such as a neural network or similar.

As it is generally known in the field of neural networks or other classifier algorithms, it is possible to provide a backpropagation operation that can be implemented on the basis of feedback defined by the cyber-physical system in relation to the actual occurrence of the conditions provided by the classifier.

The classifier provides for indicating as output a certain condition within predefined classes, which can be defined by parameters associated with conditions such as urgent, non-urgent, immediate maintenance or other conditions of the state of the cyber-physical system or parts of it.

The new training data records of the various sets are generated from an initial population of empirically or experimentally collected data records as indicated above using a genetic algorithm which optionally could be coupled with one or more neural networks, which performs a fitness assessment of the new training data records generated by the genetic algorithm. An example of such a type of training data set generation algorithm can be found in document CN110298450 or document WO2006003132 or document US7711662. These examples are directly applicable to the present invention.

An alternative may be the use of unsupervised systems such as so-called GANs. The basic architecture of a GAN comprises a first neural network or a combination of two or more neural networks which is called a generator and which has the function of generating a set of data, for example, sets of variables forming a training set, and a further neural network or a combination of two or more neural networks which has the function of a so-called discriminator and which analyses the data generated by the generator to try to decide whether this data is real or false.

In this way, the discriminator validates the data of training sets generated by the generator as reliable and thus it is possible to generate virtual training data sets.

The outcome of the discriminator analysis is used to iteratively modify the generator configuration. The outcome of the discriminator analysis is performed based on a cost function and the competition process between the generator and the discriminator includes a maximisation or minimisation of the cost function.

In an execution example, the discriminator is a discriminator known by the conventional PatchGAN name. A more detailed description of the PatchGAN discriminator model can be found, for example, at https://machinelearningmastery.com/how-to-implement-pix2pix-gan-models-from-scratch-with-keras/.

Several cost functions are possible and examples of them that can be used in this context are given at https://neptune.ai/blog/gan-loss-functions); and https://medium.com/ml-cheat-sheet/winning-at-loss-functions-2-important-loss-functions- in-computer-vision-b2b9d293e15a or in the paper A Deep Learning Loss Function based on the Perceptual Evaluation of the Speech Quality, Juan M. Martin-Donas, Angel M. Gomez, Jose A. Gonzalez and Antonio M. Peinado, Senior Member , IEEE, Published in: IEEE Signal Processing Letters (Volume: 25, Issue: 11, Nov. 2018), Page(s): 1680 - 1684, Publication date: 19 September 2018.

A further execution example of a GAN network involves a discriminator that is based on a pre-trained feature extraction network that is used to compute various cost functions. A description of feature extractor networks is available at https://www.sciencedirect.com/topics/computer-science/feature-extraction-network.

A further implementation example is the Neural Style Transfer algorithms and the related cost functions can be found at https://en.wikipedia.org/wiki/Neural_Style_Transfer.

A detailed description of the semantic cost function can be found at https://shagunsodhani.com/papers-I-read/A-Semantic-Loss-Function-for-Deep-Learning-with-Symbolic-Knowledge.

As is apparent from the foregoing in relation to the intangible members of the cyber physical system according to the present invention, these consist of implemented computer devices that enable communications and human actions, i.e. performed with and/or by humans, to be transformed into control signals and/or status signals with respect to actions or activities of humans that affect the process or activity of the cyber physical production system both with respect to production workflow and with respect to maintenance activities.

This definition applies to the term intangible parts in any combination or context or example described and claimed at both generic configuration level and specific example level. Such intangible members are constituted as an execution example that may be provided either at the level of the most general configuration or at the level of one or more of the execution examples by a so-called chatbot or other human-machine interface optionally combined with hardware signalling and/or measurement units associated with human personnel.

In an embodiment that may be provided in combination with one or more any of the embodiments described and claimed said intangible bodies are provided in combination with units associated with one or more users, which units comprise wearable or portable units performing one or more of the functions of the following list:
communicating with one or more communication units of the cyber physical system;
user identification;
Detecting user location;
detecting actions by a user equipped with said portable and/or wearable unit on a technological member of the cyber physical system equipped with a communication unit communicating with said portable or wearable unit.

In a more specific embodiment, such portable or wearable units may be in the form of RFID tags, Bluetooth devices, beacons, smartphones or handheld computers or the like.

In relation to the function of detecting actions exerted by a user on a technological member , it can be envisaged that as an alternative or in combination with the foregoing list, the portable or wearable unit is provided with at least one camera and an image processing unit, which camera being provided to frame controls and/or display devices and/or status signalling devices of a technological member and which image processing unit is configured to recognise status parameters from said signalling and/or display devices and/or the actuation of said control devices by the user associated with said portable or wearable unit.

For example, one embodiment envisages that the technological member is a control console of a machine tool, which console is provided with buttons and/or keys and/or control switches and which console is provided with a display for displaying status parameter values relative to the operating condition of said machine. The portable or wearable unit being configured to image said console by means of a camera, and the image processing unit being configured by means of software to recognise the buttons and/or keys and/or control switches and their set position and also to recognise the display and automatically identify the fields associated with the display of the values of the functional status parameters, as well as to recognise the displayed values and identify the corresponding status parameters by means of, for example, the unambiguous association of the position of the display area of these parameters on the overall display area.

## Claims

1. A method of operating a production cyber-physical system with predictive capabilities of abnormal operating conditions, wherein,
the cyber-physical production system comprises a combination of:
technological bodies designed to perform activities of transforming raw materials and/or constructive parts or of changing the functional state of a further technological entity,
wherein the technological bodies have different functional states which can be modified by direct or indirect external actions and which, based on their functional state, effect changes in the state of raw materials and/or constructive parts and/or parameters of technological processes;
one or more control units of the technological components which, on the basis of external actions, modify the functional state of one or more of said technological components;
one or more sensors for detecting chemical or physical status parameters of the raw materials and/or constructive parts and/or status of a transformation process and/or functional status of one or more technological members
one or more logic processors for synchronised and organised control and management of the functionalities of each technological member and/or of each control unit executing activity management programmes of the cyber physical production system in which instructions are encoded to make the cyber physical production system suitable for transforming the raw materials and/or the constructive parts according to the technological processes of construction and/or modification foreseen by the technological production process;
one or more communication units between one or more technological members and/or one or more control units and/or one or more sensors and/or one or more control logic processors, comprising, inter alia, feedback loops, the units of which form a communication network linking said technological members, control units, sensors and control logic processors;
and which method involves the steps of:
(a) receiving information about one or more features of a cyber-physical system in the form of one or more of said chemical or physical state parameters of raw materials and/or constructive parts and/or the state of a transformation process and/or a functional status of one or more technological members;
(b) generating a prediction of the values of one or more of said chemical or physical state parameters of raw materials and/or constructive parts and/or the state of a transformation process and/or a functional status of one or more technological members at a future point in time based on historical data uniquely linking known cases described by combinations of said parameters at past points in time to abnormal conditions of the cyber physical production system recorded and stored in a knowledge database using machine learning algorithms;
(c) determining whether the values of said parameters derived from the prediction correspond to an operational abnormal state of the cyber-physical system at the said future instant and/or at a different future instant of predicted occurrence of the abnormal event;
(d) determining a list of which technological components and/or which control units and/or which sensors separately or in combination constitute one or more of the causes of the anomaly determined by the machine learning algorithm processing at that future point in time;
(e) generating an alarm and/or information relating to the predicted event and the time instant of occurrence at which it occurs.

2. Method according to claim 1, wherein the cyber physical production system further comprises:
one or more automatic actuators for carrying out predetermined maintenance and/or replacement of technological members and/or sensors and/or control units and/or control logic processors;
a logic processor for controlling said one or more automatic actuators for performing said maintenance and/or replacement operations;
said control logic processor being interfaced with one or more of said control logic processors,
said method further comprising the following steps:
f) generating on the basis of the anomalies determined by the prediction and corresponding to the list of technological members and/or which control units and/or which sensors constitute separately or in combination one or more of the causes of the anomaly a task workflow of maintenance and/or repair and/or replacement actions in the form of a succession of commands of the automatic actuators for carrying out predetermined maintenance and/or replacement of the technological members and/or sensors and/or control units and/or control logic processors, which commands are generated and transmitted by said command logic processor;
g) recording the aforesaid workflows of maintenance and/or repair and/or replacement actions in a record in a manner univocally linked to the aforesaid chemical or physical state parameters of the raw materials and/or of the construction parts and/or of the state of a transformation process and/or of a functional status of one or more technological members and to the values of one or more of the aforesaid chemical or physical state parameters of the raw materials and/or of the construction parts and/or of the state of a transformation process and/or of a functional status of one or more technological members and to the values of one or more of the aforesaid chemical or physical state parameters of the raw materials and/or of the construction parts and/or of the state of a transformation process and/or of a functional status of one or more technological members of a transformation process and/or of a functional status of one or more technological members at a future time instant and to the condition of a possible state of anomaly of the cyber physical system at said future time instant and/or at a different future time instant as well as the list of which technological members and/or which control units and/or which sensors constitute separately or in combination one or more of the causes of the anomaly of the cyber physical system at said future time instants, into a record and
(h) storing said record in the historical case database;
(i) continuing with the activities related to steps (a) to (e) for the cyber-physical system on which steps (f) and (g) were performed;
(j) in case of determination of a prediction of a further anomaly at the future time instants foreseen in the previous prediction step or at different and closer future time instants label the workflows of automatic actions of maintenance and/or repair and/or replacement as inadequate for at least some of the actions foreseen in said workflows and insert said labels in the corresponding record;
k) generating an additional alarm and/or report the event of ineffective or imperfect automatic maintenance and/or repair and/or replacement;
(l) possibly repeating automatic steps (f) and (g), optionally subject to authorisation by human decision-makers and/or passing at least part of the control of maintenance and/or repair and/or replacement activities and optionally also of verification of the functional status to human personnel.

3. Method according to claim 1 or 2 wherein the cyber physical production system further comprises:
intangible production members constituted by management software executed by computers that generate workflows governing the activities to be carried out by human personnel and having direct or indirect communication interfaces with the communication members of at least some of the technological members and/or the control units and/or the sensors and/or the control logic processors and interfaces for input of status data of the activities envisaged in said workflows by the human execution personnel,
said method further comprising the steps of:
generating interactive and contextualised lists of information of at least part of the maintenance and/or repair and/or replacement steps, which are to be performed under direct control and/or by human personnel, said information comprising instructions specific to the maintenance and/or repair and/or replacement steps.

4. Method according to any one or more of the preceding claims, wherein the step d) is performed using root-cause analysis algorithms.

5. Method according to one or more of the preceding claims, wherein the machine learning algorithm can be selected from among the algorithms listed in the following list or combination thereof:
i) Machine Learning with Supervised Learning;
ii) Machine Learning with Unsupervised Learning;
iii) Machine Learning with learning by reinforcement;
iv) Machine Learning with semi-supervised learning.

6. Method according to one or more of the preceding claims, **characterized by** further providing the steps of measuring one or more parameters of state of the raw materials and/or of the constructive parts as a result of modifications carried out on the same by one or more of the technological bodies envisaged in the cyber physical system and/or one or more parameters of state of the raw materials and/or of the constructive parts as an input to the cyber physical system of production and/or parameters of state of the raw materials and/or of the constructive parts as an output of the cyber physical system. production cyber physical system and/or parameters of the state of the raw materials and/or of the manufacturing parts and/or of the state of a transformation process and/or of a functional status of one or more technological bodies as variables according to which the prediction of an abnormal operational state of the production cyber physical system is generated.

7. Method according to one or more of the preceding claims wherein the steps of measuring the chemical/physical parameters and/or the quantity per time unit of partially modified raw materials and/or constructive parts subject to rejection by the cyber physical production system are provided, the latter being provided with technological members and/or intangible members for checking and rejecting the at least partially modified raw materials and/or the at least partially modified constructive parts that do not meet modification conditions corresponding to those envisaged by the production process.

8. Method according to one or more of the preceding claims wherein the generation of a virtual model of the cyber physical production system is provided which virtual model is in the form of a program wherein instructions are encoded for a computer to simulate the operational state and operational actions of the technological and intangible entities constituting the cyber physical production system such as in particular:
one or more technological units designed to carry out activities of processing raw materials and/or constructive parts or of changing the functional state of a further technological unit, which technological units have different functional states that can be modified on the basis of direct or indirect external actions and which on the basis of their functional state effect changes in the state of raw materials and/or constructive parts and/or parameters of technological processes;
one or more control units of the technological components which, on the basis of external actions, modify the functional state of one or more of said technological components;
one or more sensors for detecting chemical or physical status parameters of the raw materials and/or constructive parts and/or status of a transformation process and/or functional status of one or more technological members
one or more logic processors for synchronised and organised control and management of the functionalities of each technological member and/or of each control unit executing activity management programmes of the cyber physical production system in which instructions are encoded to make the cyber physical production system suitable for transforming the raw materials and/or the constructive parts according to the technological processes of construction and/or modification foreseen by the technological production process;
one or more communication units between one or more technological bodies and/or one or more control units and/or one or more sensors and/or one or more control logic processors, comprising, inter alia, feedback loops, the units of which form a communication network linking said technological bodies, control units, sensors and control logic processors together
one or more automatic actuators for carrying out predetermined maintenance and/or replacement of the technological parts and/or sensors and/or control units and/or control logic processors;
a logic processor controlling said one or more automatic actuators for performing said maintenance and/or replacement operations;
said control logic processor being interfaced with one or more of said control logic processors,
said virtual model being configured corresponding to the chemical or physical state parameters of the raw materials and/or of the manufacturing parts and/or of the state of a transformation process and/or of a functional status of one or more technological members and/or one or more state parameters of the raw materials and/or of the manufacturing parts following the modifications carried out on the same by one or more of the technological members foreseen in the physical cyber system and/or one or more state parameters of the raw materials and/or of the manufacturing parts entering the physical cyber system and/or state parameters of the raw materials and/or of the manufacturing parts exiting the physical cyber system,
there being further foreseen the steps of verifying the effects of the maintenance/repair and/or replacement actions being performed on said virtual model on the basis of a simulation of said actions on said virtual model and the effects of said actions being measured by means of the simulation through said virtual model in future situations.

9. Method according to one or more of the preceding claims, wherein it is envisaged to generate parameters for evaluating the operating conditions of said one or more technological members and/or one or more control units and/or one or more sensors and/or one or more communication units and/or one or more control logic processors and/or one or more maintenance/repair/replacement actuators and/or of said one or more intangible members in the form of so-called KPIs as well as parameters for globally evaluating the performance of the cyber physical production system in the form of KPIs, said KPIs constituting the measurement metric for discriminating normal conditions from abnormal ones, said KPIs being calculated according to the following steps
segmenting the production process of the physical cyber production system into elementary processes whose interconnection generates the overall production process of the physical cyber system;
determining the efficiencies of individual elementary processes in the form of KRIs, Key Result Indicators;
elaborating KRIs for the calculation of performance indicators (so-called PIs);
extracting from the performance indicators, the key indicators in the process management and definition of the same some KPIs;
executing a correlation process between KPIs, processes and data relating to one or more chemical or physical status parameters of raw materials and/or construction parts and/or the status of a transformation process and/or the functional status of one or more technological members as variables according to which the prediction of an abnormal operating status of the cyber-physical production system is generated;
identifying KPIs to assess the system performance in real time and the future trend with reference to abnormal operating conditions.

10. Method according to one or more of the preceding claims, wherein the software in which the instructions for executing the steps of said method are encoded envisages that said software is executed by an Edge Computing module interfaced with one or more of the control and/or command logic processors of the cyber physical production system and/or of the virtual model thereof, said control and/or command being executed by means of actuators including, for example, devices realized according to an IoT technology.

11. An improved cyber physical system operating according to a combination or sub-combination of features described above and/or according to one or more of the above described forms and/or variants of said method, wherein said system comprises:
technological bodies designed to perform activities of processing raw materials and/or constructive parts or of changing the functional state of a further technological body,
wherein the technological components have various functional states which can be modified by direct or indirect external action and which, depending on their functional state, effect changes in the state of raw materials and/or constructional parts and/or parameters of technological processes;
one or more control units of the technological components which, on the basis of external actions, modify the functional state of one or more of said technological components;
one or more sensors for detecting chemical or physical status parameters of the raw materials and/or constructive parts and/or status of a transformation process and/or functional status of one or more technological members
one or more logic processors for synchronised and organised control and management of the functionalities of each technological member and/or of each control unit executing activity management programmes of the cyber physical production system in which instructions are encoded to make the cyber physical production system suitable for transforming the raw materials and/or the constructive parts according to the technological processes of construction and/or modification foreseen by the technological production process;
one or more communication units between one or more technological bodies and/or one or more control units and/or one or more sensors and/or one or more control logic processors, comprising, inter alia, feedback loops, the units of which form a communication network linking said technological bodies, control units, sensors and control logic processors together
a computer into which is loaded a programme for predicting operating conditions of the cyber-physical system of production at predetermined instants of time now and in the future and which executes said programme,
in which program are encoded in a manner executable by said computer the instructions for making said computer capable of performing the following steps:
(a) receiving information about one or more characteristics of a cyber-physical system in the form of one or more of said chemical or physical state parameters of raw materials and/or constructive parts and/or the state of a transformation process and/or a functional status of one or more technological members;
(b) generating a prediction of the values of one or more of said chemical or physical state parameters of raw materials and/or manufacturing parts and/or of the state of a transformation process and/or of a functional status of one or more technological components at a future point in time based on historical data unambiguously linking known cases described by combinations of said parameters at past points in time to abnormal conditions of the cyber-physical production system recorded and stored in a knowledge database using machine learning algorithms;
(c) determining whether the values of said parameters derived from the prediction correspond to an operational abnormal state of the cyber-physical system at the said future instant and/or at a different future instant of predicted occurrence of the abnormal event;
(d) determining a list of which technological units and/or which control units and/or which sensors separately or in combination constitute one or more of the causes of the anomaly determined by the processing by a machine learning algorithm at the said future point in time of occurrence;
(e) generating an alarm and/or information about the predicted event and the time instant of occurrence at which said event occurs, and at which, according to the invention, the alarm and/or information is generated.
and wherein according to the invention, the cyber physical production system comprises or is associated with:
one or more automatic actuators for carrying out pre-established maintenance and/or replacement of technological components and/or sensors and/or control units and/or control logic processors;
a logic processor controlling said one or more automatic actuators for performing said maintenance and/or replacement operations;
said control logic processor being interfaced with one or more of said control logic processors,
whereas said program for predicting operating conditions of the cyber physical production system further comprises, encoded in a manner executable by said processor, instructions for making said processor capable of performing the following steps
(f) generating on the basis of the anomalies determined by the prediction and corresponding to the list of technological members and/or which control units and/or which sensors constitute separately or in combination one or more of the causes of the anomaly a task workflow of maintenance and/or repair and/or replacement actions in the form of a succession of commands of the automatic actuators for carrying out predetermined maintenance and/or replacement of the technological members and/or sensors and/or control units and/or control logic processors, which commands are generated and transmitted by said control logic processor;
g) recording the aforesaid workflows of maintenance and/or repair and/or replacement actions in a record in a way which is univocally correlated to the aforesaid chemical or physical state parameters of the raw materials and/or of the constructive parts and/or of the state of a transformation process and/or of a functional status of one or more technological members and to the values of one or more of the aforesaid chemical or physical state parameters of the raw materials and/or of the constructive parts and/or of the state of a transformation process and/or of a functional status of one or more technological members and to the values of one or more of the aforesaid chemical or physical state parameters of the raw materials and/or of the constructive parts and/or of the state of a transformation process and/or of a functional status of one or more technological members of a transformation process and/or of a functional status of one or more technological members at a future time instant and to the condition of a possible state of anomaly of the cyber physical system at said future time instant and/or at a different future time instant as well as the list of which technological members and/or which control units and/or which sensors constitute separately or in combination one or more of the causes of the anomaly of the cyber physical system at said future time instants, into a record and
(h) store said record in the historical case database;
(i) continuing with the activities related to steps (a) to (e) for the cyber physical system on which steps (f) and (g) have been performed;
(j) in the case of determining a prediction of a further failure at the future time instants foreseen in the previous prediction step or at different and closer future time instants label the workflows of automatic maintenance and/or repair and/or replacement actions as inadequate for at least some of the actions foreseen in said workflows and insert such labels in the corresponding record;
(k) generating a further alarm and/or report the event of ineffective or inadequate automatic maintenance and/or repair and/or replacement action;
l) possibly repeating the automatic steps f) and g), optionally subject to authorisation by human decision-makers and/or passing at least in part the control of the maintenance and/or repair and/or replacement activities and optionally also the verification of the functional status to human personnel.

12. System according to claim 11, wherein said system further comprises workflow management systems governing activities to be carried out by human personnel which systems comprise at least one computer in which workflow generation software is loaded and which computer executes said software,
in said software being encoded instructions for the computer to make it capable of generating interactive and contextualised lists of information of at least part of the maintenance and/or repair and/or replacement steps, which are to be performed under direct control and/or by human personnel, said information comprising instructions specific to the maintenance and/or repair and/or replacement steps
one or more interfaces for direct or indirect communication of said computer with the communication members of at least some of the technological members and/or control units and/or sensors and/or control logic processors and interfaces for input of status data of the activities foreseen in said workflows by the human executing personnel;
one or more input and output interfaces with a human executor which interfaces provide for the output in human-intelligible format of said workflows and the input by the human executor in human-intelligible format of execution feedback of the tasks foreseen in said workflows,
and while said data is provided via a communication interface to the computer executing the production cyber-physical system operating condition prediction programme.

13. Method according to claim 11 or 12, wherein the computer executing said program for predicting operating conditions of the production cyber physical system is implemented according to an Edge computing configuration.

14. A method according to one or more of the preceding claims from 11 to 13, wherein at least said processor executing said program for predicting operating conditions of the cyber physical production system and/or said one or more automatic actuators for performing predetermined maintenance and/or replacement of technological members and/or sensors and/or control units and/or control logic processors; at least said one control logic processor of said one or more automatic actuators for performing said maintenance and/or replacement are implemented in the form of a separate retrofitting system of a cyber-physical production system, being provided with communication interfaces linking said separate retrofitting system to the pre-existing cyber-physical production system.

15. System according to one or more of the preceding claims from 11 to 14, wherein the communication interfaces of the separate retrofitting system connect said computer and/or said one or more automatic processing actuators and/or said one or more control logic processors respectively with the corresponding technological members membersand/or control units and/or measurement sensors and/or control processors and/or communication units comprising the cyber physical production system and possibly also alternatively with the corresponding virtual elements of the virtual model of the cyber physical production system.
